Europäisches Patentamt

European Patent Office

Office européen des brevets

(19)

(11) **EP 1 465 436 A1**

(12) **EUROPEAN PATENT APPLICATION**

(43) Date of publication:
**06.10.2004 Bulletin 2004/41**

(51) Int Cl.⁷: **H04N 9/64**, H04N 5/57

(21) Application number: **03007450.4**

(22) Date of filing: **03.04.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK RO**

(71) Applicant: **Sony International (Europe) GmbH
10785 Berlin (DE)**

(72) Inventors:
• **Lei, Zhichun Stuttgart Technology Center
70327 Stuttgart (DE)**

• **Dilly, Altfried Stuttgart Technology Center
70327 Stuttgart (DE)**
• **Wagner, Peter Stuttgart Technology Center
70327 Stuttgart (DE)**

(74) Representative: **Müller - Hoffmann & Partner
Patentanwälte,
Innere Wiener Strasse 17
81667 München (DE)**

(54) **Natural impression preservation for histogram equalized images**

(57)     In an image contrast enhancement method and unit based on a pixelwise luminance level distribution histogram of an original image, the invention solves the colour distortion problem, in particular skin tone degration caused by histogram equalization. For this purpose, according to the invention, two chrominance components of an image signal, e.g., a TV signal, are compared to a human skin colour distribution curve. Pixels found in skin coloured regions are used to modify the histogram in a way that it tends to distribute uniformly so that the histogram equalization does not change the signals at least in those regions containing human face areas. Pixels found in non-skin coloured regions are dealt with in the same way as with standard histogram equalization. The invention is particularly useful for both the local and global histogram equalization technique.

**Fig. 2**

EP 1 465 436 A1

**EP 1 465 436 A1**

**Description**

This invention relates to a method for image contrast enhancement based on a pixelwise luminance level distribution histogram of an image in question (or original image) and includes the detection of at least one image region with colour components relating to human skin for influencing the histogram-based image processing. The invention also relates to a computer program product adapted for processing the method steps. Further, the invention relates to a contrast enhancement unit including means for influencing histogram-based image processing in relation to detected human skin-related colour components.

Histogram equalization is an effective technique to improve image contrast and as a result to improve image quality, especially the quality of TV images. The underlying principle of histogram equalization applied for an image contrast enhancement method is that for maximum image information perception the image luminance value distribution (i.e. the histogram) should be uniform over the entire image intensity range as described in W. K. Pratt, "Digital Image Processing", 2nd edition, ISBN 4-471-85766-1, John Wiley & Sons, Incl, 1991. Through mapping of the pixel luminance values by means of a mapping curve that is obtained by normalizing the cumulative histogram, also called the Cumulative Distribution Function (CDF) calculated from the image in question, the luminance values of the transformed image will be distributed as uniformly as possible over the whole dynamic range. As can be understood from the principle of histogram equalization, such equalization does not change the pixel values if the histogram distributes uniformly. In principle, histogram equalization can be divided into two categories, i.e. the so-called global approach and the local approach. For global histogram equalization, only one histogram is required and it is calculated from a whole image or from a region of interest (ROI) of a whole image. Due to its simplicity, in the past, global histogram equalization was widely investigated and found wide application. Local histogram equalization which is also called adaptive histogram equalization requires more than one histogram, and each histogram is built from one area of an image. Compared to global histogram equalization, local histogram equalization requires a higher computational load, but it can adapt to the image local features so that a better performance is achieved.

Both kinds of histogram equalization can cause a colour degration problem, in particular skin tone degration as a negatively perceived side effect. Skin tones are very sensitive to the human visual system, especially in the human face area. If the skin tone is changed, the image appears unnatural. This kind of side effect can be a reason to limit the amount of image contrast enhancement, even to prevent the application of histogram equalization, e.g. to TV image processing.

In order to reduce colour distortion, US 5,808,697 suggests that the amplitude of the modulated chrominance signal is processed by histogram equalization, but preferably by making a single linear modification in each period of the chrominance signal so that the colour of the human face is not affected.

WO 00/46983 teaches several approaches for addressing colour distribution problems. In particular, this document suggests to calculate a ratio between the luminance values of the histogram equalization processed pixels and that of the original pixels. This ratio is applied to modify the colour components so that colour saturation can be corrected. This known approach envisages avoiding colour distortion caused by global histogram equalization.

EP 1 126 410 A1 also aims at improving the colour performance if histogram equalization is applied. The technical teaching of this document is to reduce the problem caused by histogram equalization in special texture or colour regions, in particular the skin tone degration problem, because skin tones in particular in human face areas are very sensitive to human eyes. According to this published patent application, the histogram equalization is performed as usual for areas supplying signals other than skin tones, grass etc. For detected skin tone areas, a slightly different histogram equalization is performed, i.e. the enhancement amount is reduced. Although this document also envisages improving the performance of global histogram equalization, it teaches measuring the local picture signal properties and is focussing on the advantage of local histogram equalization.

Further, the pending not-prepublished European patent application EP 02 004 428, focussing on global histogram equalization, suggests to smooth the histogram by means of low pass filtering in the frequency domain, or to apply a zero-phase forward and reverse digital filtering.

It is an object of the invention to solve or at least improve the colour distortion problem caused by histogram equaliziation of digital images especially of TV images.

It is a further object of the invention to improve the contrast enhancing of digital images by histogram equalization without being affected by the detection precision of skin coloured regions, in particular by avoiding that the skin coloured region detection may cause any artifacts.

A method for image contrast enhancement based on a pixelwise luminance level distribution histogram of an image in question and including the detection of at least one image region with colour components relating to human skin for influencing the histogram-based image processing, in accordance with the invention includes that for determining the human skin-related regional colour components, the image signal is compared to a human skin distribution curve in the chromaticity plane, and that the thus detected and probably weighted skin coloured pixels are used to modify the histogram for the image part comprising said human skin-related colour components so that it distributes as uniformly as possible over the image signal dynamic range.

The above method is in particular useful for local histogram equaliziation, because for this technique an image is divided into plural blocks, and these blocks are processed differently. Even for global histogram equalization this method is also useful to alleviate color distortion.

In accordance with an advantageous realization, the detected and probably weighted skin coloured pixels are dealt with to modify the image histogram so that it distributes as uniformly as possible over the full image signal dynamic range, or in that the detected and probably weighted skin coloured pixels are dealt with to modify the image histogram processing such that after smoothing an approximate unity straight line for that block is achieved.

For detection of the skin coloured region, the colour components of the image signal, in particular a TV signal, are compared to the human skin colour distribution curve in the chromaticity plane, and this curve is or can be measured from specific skin types and/or is available mathematically for Caucasian, Asian or Negro type skins, as is described in M. Soriano et al., "Skin Detection In Video Under Changing Illumination Conditions", 07695-0750-6/00, 2000 IEEE; p. 839 to 842. For further details of this curve, reference is made to this document.

In accordance with a preferred embodiment of the invention, whether a pixel belongs to a skin coloured region within the human skin coloured distribution curve in the chromaticity plane is determined by an algorithm defining a skin-threshold curve:

$$\text{skin }(r,g) = \begin{cases} 1, & (g<g_{up}) \cdot (g>g_{down}) \cdot (w_r>0{,}004) \\ 0, & \text{otherwise} \end{cases} \qquad \text{Equation (1)}$$

wherein "1" stands for a skin coloured pixel, and "0" for non-skin coloured pixels;
(r,g) represents the normalized colour space, with

$$r = \frac{R}{R+G+B} \text{ and } g = \frac{G}{R+G+B} \; ; \qquad \text{Equation (2)}$$

R, G and B defining the primary colour components $\underline{R}$ed, $\underline{G}$reen and $\underline{B}$lue, and the factors $g_{up}$, $g_{down}$ and $w_r$ being defined by

$$w_r = (r-0.33)^2 + (g-0.33)^2$$

$$g_{up} = -1.8423 \cdot r^2 + 1.5294 \cdot r + 0.0422$$

$$g_{down} = -0.7279 \cdot r^2 + 0.6066 \cdot r + 0.1766.$$

It is to be noted that the precision of skin coloured region detection is strongly dependent on the image brightness, i.e. the lighting conditions as images were taken. For images taken under poor lighting conditions, e.g. too dark or too bright, the precision of skin coloured region detection is usually low. But also other factors, e.g. a birthmark, can affect skin coloured region detection, and cause skin coloured region broken around these pixels. If necessary, one can apply the Morphological Operators to connect the broken regions.

In accordance with further advantageous details of the invention, at first the histogram is calculated from non-skin coloured pixels. Then, the resulting histogram is analyzed to determine luminance levels of zero occurrence in the histogram, and subsequently the skin coloured pixels are used to at least partly fill the zero occurrence histogram spaces. The resulting histogram is smoothed by low pass filtering in the frequency domain such that a mapping curve is obtained that leaves the pixel values of skin areas of an image essentially unchanged. Another possibility is to smooth the histogram by zero-phase forward and reverse digital filtering or cascaded IIR filtering such that a mapping curve is obtained leaving the pixel values of skin areas of an image essentially unchanged.

The invention and advantageous features, embodiments and details thereof are explained in the following with reference to the accompanying drawings in which

**Fig. 1A**    shows a histogram before histogram equalization has been performed;

**Fig. 1B**     represents a CDF curve obtained by integrating the histogram;

**Fig. 1C**     shows a plurality of its smoothed histogram equalization transformation curves for equalizing a histogram or as a case may be globally, and

**Fig. 2**      shows the block diagram of a contrast enhancement and histogram smoothing unit in accordance with the invention.

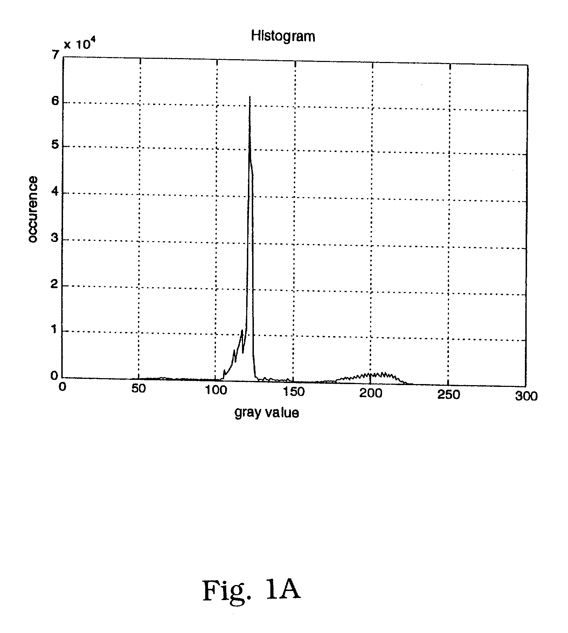

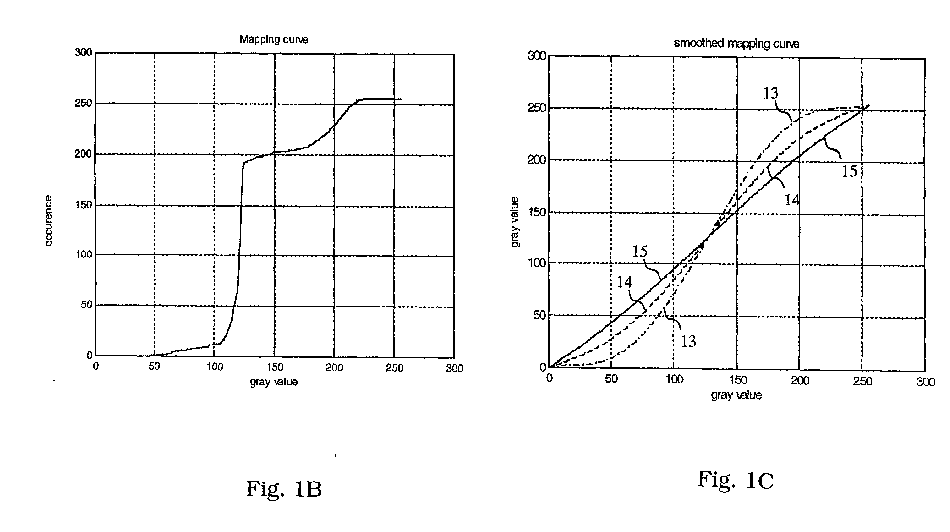

Relating to Fig. 1A, 1B and 1C first reference is made to above mentioned European patent application EP 02 004 428.

Whereas Fig. 1A represents a histogram before histogram equalization has been performed, in Fig. 1B a CDF curve is shown. By scaling this CDF one could obtain a histogram equalization (HE) transformation function for performing a total histogram equalization.

In Fig. 1C, three different HE transformation curves 13, 14, 15 for performing a partial histogram equalization are shown, which correspond to the same luminance level distribution as the Cumulative Distribution Function shown in Fig. 1B. The curve 15 has been obtained by integrating a heavily attenuated histogram, which could have been obtained by a low-pass filtering operation with a rather low cut-off frequency. The curve 15 is very close to the unity straight transformation curve, and therefore, the amount of histogram equalization obtained by applying curve 15 to the image is rather low. The HE transformation curve 15 is well-suited for high-contrast images.

Accordingly, the HE transformation curve 13 could have been obtained by integrating a histogram that has not been attenuated too much. Such a slight attenuation corresponds to a low-pass filter with a high cut-off frequency. By applying the HE transformation curve 13 to the image, the distribution of the luminance levels is changed considerably. A luminance value of 200 will be shifted towards a much brighter luminance value of approximately 240. The contrast is enhanced significantly, and therefore, the HE transformation curve 13 is well-suited for low-contrast images. Curve 13 thus corresponds to a large amount of histogram equalization.

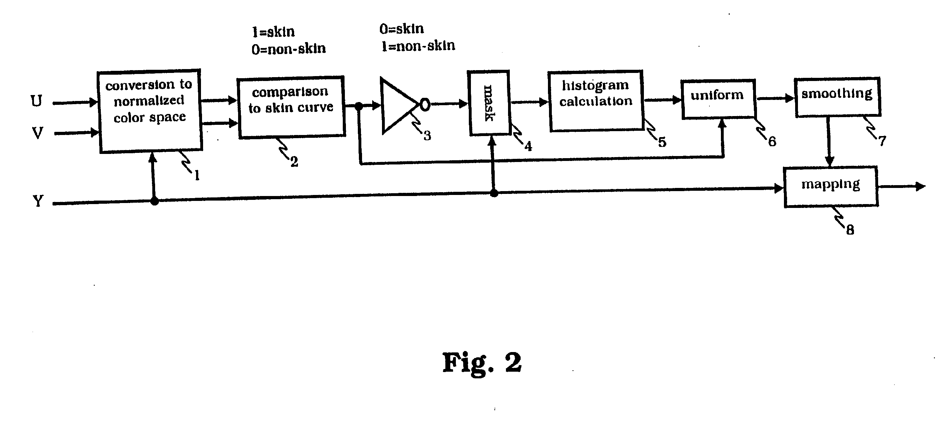

A histogram calculation and modification according to the invention is explained in the following with reference to Fig. 2. For pixels in non-skin coloured regions, the histogram is calculated as usual and a detailed explanation thereof is omitted.

On the other hand, the pixels in skin coloured regions are not directly counted as to the occurrence number of their respective luminance levels, but probably are counted as to the occurrence number of other luminance levels, so that the histogram distributes over the full image signal dynamic range as uniform as possible, i.e. over a range of "0" to "255" for 8 bits quantized TV signal. The functional block diagram of Fig. 2 shows this approach. The colour component signals U, V are converted with reference to the luminance signal Y to fit a normalized colour space in block 1. Then in block 2, the comparison to the human skin colour distribution curve is performed according to the above-specified equation (1) for the factor skin (r,g). The result of this comparison, "1" for skin and "0" for non-skin, is inverted in block 3 and transferred to block 4 for masking all skin-related pixels. Then in block 5, the usual histogram calculation is performed followed by block 6 for uniforming the histogram. Then in block 7, a histogram smoothing process is added which is briefly explained further below and in details in already mentioned European patent application No. EP 02 004 428 which document is incorporated herein by reference. Then, with reference to the luminance signal Y, the smoothed and partly uniformed image histogram is subject of a mapping process in block 8.

As will be understood by those skilled in the art, the "uniform" operation does not play any role if there are no skin coloured pixels or only a few skin coloured pixels detected in an image. Such an image can be one consisting of only brightness pixels, or images consisting of both brightness pixels and chrominance pixels, but in darker scenes, i. e. the images taken under poor lighting conditions. Fortunately, the human visual system usually perceives neither colour distortion nor unnatural impression from these kinds of images, even though it contains skin color regions. If the number of skin coloured pixels in an image is not negligible, they are used to make the histogram distribution as uniform as possible, or to achieve such an effect that the resulting mapping curve does not or only slightly change the pixel values in accordance with the invention. That is, the resulting mapping curve approximates the unity straight line.

For local histogram equalization technique, an image is divided into many blocks, and for each block, a histogram has to be generated. Thus, in skin coloured regions, e.g. in face ares, the skin coloured pixels even dominate the histogram. As a result, the invention is especially effective for local histogram equalization technique.

There are several alternatives to reach this purpose. At first, one can calculate the histogram from the non-skin coloured pixels. After that, the histogram is analyzed, and the luminance levels of zero occurrence in the histogram are found out, and are denoted as "empty histogram spaces". The skin coloured pixels are then used to fill the empty histogram space or spaces with low occurrence. After smoothing the resulting histogram, e.g. by means of low pass filtering in the frequency domain, or by the zero-phase forward and reverse digital filtering, or cascaded IIR filtering, one can obtain a mapping curve that does not or only slightly change the pixel values.

Another possibility is to modify the histogram simply by counting the skin coloured pixels with reference to the occurrence of the darkest pixel level (level "16" for studio video signals) and/or the brightest pixel level (level "235" for studio video signals). That is, the first skin coloured pixel is counted to the occurrence of the darkest pixel level ("16" for the above example); the second skin coloured pixel is counted to the occurrence of the brightest pixel level ("235" for the above example); and the third skin coloured pixel is again counted to the occurrence of the darkest pixel level; and so on. After smoothing the resulting histogram, one obtains a mapping curve that does not or only slightly change the pixel values, in particular if the number of the skin coloured pixels in an image is not very small.

The main advantages of the present invention are the following:

In the past, global histogram equalization was preferred due to its low computational load. However, global histogram equalization cannot adapt to image local features. As most of the images are not uniform, the performance of global histogram equalization is usually not satisfactory. Thus, there is a strong tendency to apply local histogram equalization to enhance the image contrast. This tendency is particularly spead up by the increasing computation power of computers and signal processors as well as by the rapid development of semiconductor technologies. However, as discussed above, histogram equalization can cause colour distortion. To remedy this problem, it is already known to use the skin coloured region detection result and to directly reduce the histogram equalization amount in and around the skin coloured regions. The invention is an improvement in so far as the colour distortion problem reduces the histogram equalization amount on the skin coloured regions by an indirect approach, i.e. by modifying the histogram in such a way that one achieves an effect that the histogram, in particular for the local approach, is essentially uniformly distributed.

## Claims

1. A method for image contrast enhancement based on a pixelwise luminance level distribution histogram of an original image including the detection of at least one image region with colour components relating to human skin for influencing the histogram, **characterized in that** for determining the human skin-related regional colour pixels, the image signal is compared to a human skin distribution curve in the chromaticity plane, and **in that** the thus detected and weighted skin coloured pixels are used to modify the histogram so that it distributes uniformly over at least that part of the image signal dynamic range comprising said human skin-related colour components.

2. The method of claim 1, **characterized in that** the detected and weighted skin coloured pixels are dealt with to modify the image histogram so that it distributes as uniformly as possible over the full image signal dynamic range.

3. The method of claim 1, **characterized in that** the detected and weighted skin coloured pixels are dealt with to modify the image histogram processing such that a pixel mapping curve is smoothed to approximate a unity straight line for at least a part of a dynamic range of the image signal.

4. The method of any of the preceding claims, **characterized in that** the weighting factor for defining whether a pixel belongs to a skin coloured region within the human skin colour distribution curve in the chromaticity plane is determined by an algorithm.

5. The method according to claim 3, **characterized in that** the pixel values of skin coloured regions used for histogram uniforming are alternatively counted to the occurrence of the luminance value of darkest pixel level and the luminance value of the brightest pixel level, respectively.

6. The method according to anyone of the preceding claims, **characterized in that** at first the histogram is calculated from non-skin coloured pixels, then the resulting histogram is analyzed to determine luminance levels of zero occurrence in the histogram and subsequently the skin coloured pixels are used to at least partly fill the zero occurrence histogram spaces.

7. The method of at least one of the preceding claims, **characterized in that** the resulting histogram is smoothed by low pass filtering in the frequency domain such that a mapping curve is obtained that leaves the pixel values of at least local areas of an image essentially unchanged.

8. The method of at least one of claims 1 to 6, **characterized in that** the resulting histogram is smoothed by zero-phase forward and reverse digital filtering or IIR filtering, or cascated IIR filtering such that a mapping curve is obtained leaving the pixel values of at least local areas of an image essentially unchanged.

9. The method of at least one of the preceding claims, **characterized in that** this method is applied to TV image processing.

10. Contrast enhancement unit for improving the contrast of multitude pixeled digital images including means for detecting image regions with colour components relating to human skin and means for influencing a histogram-based image processing based on said detected human skin-related colour components, **characterized by**

   - means for generating a histogram based on the luminance level distribution of an original image,
   - means for storing a human skin distribution curve within the chromaticity plane,
   - means for determining human skin-related colour pixels, and
   - means for modifying said histogram by use of said weighting factor(s) so that it distributes uniformly over at least a part of the dynamic range of the considered signal.

11. The contrast enhancement unit of claim 10, **characterized by** means for dividing an image into a plurality of blocks and for generating a histogram for each block, and by means for limiting said histogram uniforming process to those image blocks for which skin coloured components have been detected.

12. A computer program product comprising computer program means adapted to processing the method steps as defined in anyone of claims 1 to 9 when being executed on a digital signal processor.

Fig. 1A

smoothed mapping curve

Fig. 1C

Mapping curve

Fig. 1B

U

V

Y

1=skin
0=non-skin

0=skin
1=non-skin

conversion to normalized color space 1

comparison to skin curve 2

3

mask 4

histogram calculation 5

uniform 6

smoothing 7

mapping 8

**Fig. 2**

## EUROPEAN SEARCH REPORT

European Patent Office

Application Number

EP 03 00 7450

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 1 130 545 A (EASTMAN KODAK CO) 5 September 2001 (2001-09-05) * column 5, line 52 - column 11, line 20 * --- | 1,10 | H04N9/64 H04N5/57 |
| A | PATENT ABSTRACTS OF JAPAN vol. 2000, no. 05, 14 September 2000 (2000-09-14) & JP 2000 059629 A (MINOLTA CO LTD), 25 February 2000 (2000-02-25) * abstract * | 1,10 | |
| P,A | & US 2003/152283 A1 (MORIWAKI KAGUMI) 14 August 2003 (2003-08-14) * page 3, paragraph 50 - page 4, paragraph 66 * ----- | 1,10 | |
| | | | TECHNICAL FIELDS SEARCHED (Int.Cl.7) H04N G06T |

The present search report has been drawn up for all claims

| Place of search | Date of completion of the search | Examiner |
|---|---|---|
| THE HAGUE | 5 September 2003 | Pigniez, T |

**ANNEX TO THE EUROPEAN SEARCH REPORT
ON EUROPEAN PATENT APPLICATION NO.** EP 03 00 7450

This annex lists the patent family members relating to the patent documents cited in the above-mentioned European search report.
The members are as contained in the European Patent Office EDP file on
The European Patent Office is in no way liable for these particulars which are merely given for the purpose of information.

05-09-2003

| Patent document cited in search report | | Publication date | Patent family member(s) | | Publication date |
|---|---|---|---|---|---|
| EP 1130545 | A | 05-09-2001 | EP | 1130545 A2 | 05-09-2001 |
| | | | JP | 2001285639 A | 12-10-2001 |
| JP 2000059629 | A | 25-02-2000 | US | 2003152283 A1 | 14-08-2003 |